# EUROPÄISCHE PATENTSCHRIFT

(11) **EP 2 275 313 B1**
(45) Veröffentlichungstag und Bekanntmachung des Hinweises auf die Patenterteilung: **09.05.2012**
(21) Anmeldenummer: 10167821.7
(22) Anmeldetag: 30.06.2010
(51) Int. Cl.: B60R 25/02

(54) **Sperrvorrichtung zum Sperren eines funktionswesentlichen Bauteils eines Kraftfahrzeugs, insbesondere zur Sperrung einer Lenkspindel eines Kraftfahrzeugs**
Blocking device for blocking an essential component of a motor vehicle, particularly for blocking a steering column of a motor vehicle
Dispositif de blocage destiné au blocage d'un composant essentiellement fonctionnel d'un véhicule automobile, notamment pour le blocage d'un arbre de direction de véhicule automobile

(30) Priorität: 15.07.2009 DE 102009033485
(43) Veröffentlichungstag der Anmeldung: 19.01.2011
(73) Patentinhaber: Huf Hülsbeck & Fürst GmbH & Co. KG, 42551 Velbert (DE)
(72) Erfinder: Dr. Klein, Matthias, 85221, Dachau (DE); Pieper, Friedrich, 84513, Töging (DE); Pieronczyk, Martin, 85221, Dachau (DE); Müller, Josef, 85254, Einsbach (DE); Fraisse, Gaetan, 78640, Neauphle le Vieux (FR)
(74) Vertreter: Vogel, Andreas

(56) Entgegenhaltungen:
- EP-A1- 1 447 286
- DE-B3- 10 247 803

## Beschreibung

Die vorliegende Erfindung betrifft eine Sperrvorrichtung zum Sperren eines funktionswesentlichen Bauteils eines Kraftfahrzeugs, insbesondere zur Sperrung einer Lenkspindel. Die Sperrvorrichtung weist einen in einem Gehäuse der Sperrvorrichtung aufgenommenen Sperrbolzen auf, der in einer Hubachse zwischen einer Sperrstellung zur Sperrung des funktionswesentlichen Bauteils und einer Freigabestellung zur Freigabe des funktionswesentlichen Bauteils beweglich ist. Der Sperrbolzen ist in der Sperrstellung mittels eines mit einer Formschlussgeometrie des Sperrbolzens zusammenwirkenden, im Gehäuse beweglich gelagerten Sicherungselementes blockierbar. Ferner ist ein Rückhaltearm zur Rückhaltung des Sicherungselementes aus dem Eingriff in der Formschlussgeometrie des Sperrbolzens vorgesehen, derart, dass bei Bewegung des Rückhaltearms aus der Rückhaltestellung das Sicherungselement in Eingriff in die Formschlussgeometrie gelangt und ein Lösen des Sperrbolzens aus der Sperrstellung heraus verhindert ist, gemäß der Merkmale des Oberbegriffs des Anspruches 1.

Derartige Sperrvorrichtungen zum Sperren funktionswesentlicher Bauteile von Kraftfahrzeugen sind hinreichend bekannt. Diese auch als Lenkradschlösser bekannten Sperrvorrichtungen dienen hauptsächlich zur Sperrung der Lenkspindel eines Kraftfahrzeugs, wobei das funktionswesentliche Bauteil des Kraftfahrzeugs beispielsweise auch ein Getriebe oder eine Getriebeschaltung des Kraftfahrzeugs betreffen kann, die durch die Sperrvorrichtung gesperrt wird. Folglich betrifft jedes Bauteil, das zum Betrieb des Kraftfahrzeugs funktionswesentlich ist, ein mögliches Bauteil, das durch die Sperrvorrichtung gesperrt werden kann. Allgemein werden derartige Sperrvorrichtungen zur Sperrung der Lenkspindel eines Kraftfahrzeugs auch als mechanische Wegfahrsperre bezeichnet.

Die Sperrung erfolgt durch einen Sperrbolzen, der zwischen einer Sperrstellung und einer Freigabestellung hin und her bewegt werden kann. Befindet sich der Sperrbolzen in der Sperrstellung, greift dieser meist formschlüssig in eine Nut ein, die beispielsweise auf der Lenkspindel vorhanden sein kann. Wird der Sperrbolzen in die Freigabestellung überführt, wird dieser aus der Nut zurückgezogen, und die Lenkspindel kann frei gedreht werden. Um die Sicherheit gegen Manipulation derartiger Sperrvorrichtungen zu erhöhen, besitzen diese ein Sicherungselement, das den Sperrbolzen dann in der Sperrstellung blockiert, wenn die Sperrvorrichtung gewaltsam geöffnet wird. Die Sperrvorrichtungen besitzen ein Gehäuse, das wenigstens einen Gehäusegrundkörper und einen diesen verschließenden deckelartigen Gehäuseteil besitzt. Wird der deckelartige Gehäuseteil gewaltsam entfernt, schnappt das Sicherungselement in eine Formschlussgeometrie innerhalb des Sperrbolzens ein, und der Sperrbolzen kann aus der Sperrvorrichtung nicht entnommen werden und folglich auch nicht in die Freigabestellung überführt werden.

Aus der DE 102 47 803 B3 ist eine Sperrvorrichtung zum Sperren einer Lenkspindel eines Kraftfahrzeugs nach dem Oberbegriff von Anspruch 1 bekannt. Hierin ist ein Sicherungselement gezeigt, das durch einen Rückhaltearm in einer Rückzugstellung gehalten wird. Der Rückhaltearm ist am deckelartigen Gehäuseteil des Gehäuses angebracht, so dass der Rückhaltearm bei Entfernen des Gehäuseteils aus der rückhaltenden Wirkverbindung mit dem Sicherungselement gelöst wird. Durch eine Feder schnappt das Sicherungselement in die Formschlussgeometrie innerhalb des Sperrbolzens, und der Sperrbolzen kann nicht mehr durch die Öffnung, die durch das entnommene Gehäuseteil gebildet wird, herausgeführt werden.

Jedoch ergibt sich bei einer derartigen Anordnung der Nachteil, dass das deckelartige Gehäuseteil derart manipuliert werden kann, das eine Öffnung des rückwärtigen Bereiches hinter dem Sperrbolzen freigelegt werden kann, ohne den Rückhaltearm aus der rückhaltenden Wirkverbindung mit dem Sicherungselement zu lösen. Beispielsweise kann das deckelartige Gehäuseteil im rückwärtigen Bereich des Sperrbolzens aufgebrochen, aufgebohrt oder aufgestemmt werden, ohne dass das Gehäuseteil insgesamt vom Gehäusegrundkörper abgehoben wird. Folglich verbleibt auch der Rückhaltearm in seiner rückhaltenden Wirkverbindung mit dem Sicherungselement, während der Sperrbolzen entnommen werden kann.

Es ist daher die Aufgabe der vorliegenden Erfindung, eine Sperrvorrichtung zum Sperren eines funktionswesentlichen Bauteils eines Kraftfahrzeugs zu schaffen, die die Sicherheit gegen ein unberechtigtes Lösen des Sperrbolzens aus der Sperrstellung weiter verbessert.

Diese Aufgabe wird ausgehend von einer Sperrvorrichtung zum Sperren eines funktionswesentlichen Bauteils eines Kraftfahrzeugs gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Gehäuse einen Gehäuseteil mit einem sicherheitsrelevanten Gehäusebereich aufweist, wobei der Rückhaltearm mit dem Gehäuseteil eine Verbindungsstelle aufweist, die wenigstens teilweise innerhalb des sicherheitsrelevanten Gehäusebereiches angeordnet ist.

Durch die erfindungsgemäße Anordnung des Rückhaltearms in einem sicherheitsrelevanten Gehäusebereich wird der Vorteil erreicht, dass bei einem unberechtigten Öffnen der Sperrvorrichtung auch durch eine Entnahme nur eines Teils des deckelartigen Gehäuseteils zu Manipulation des Sperrbolzens ein Lösen des Rückhaltearms aus der rückhaltenden Wirkverbindung mit dem Sicherungselement grundsätzlich ausgelöst wird.

Der sicherheitsrelevante Gehäusebereich ist um die Hubachse des Sperrbolzens herum gebildet und decht folglich einen rückwärtigen Entnahmebereich des Sperrbolzens ab. Der Sperrbolzen besitzt quer zur Hubachse eine Querschnittsgeometrie, so dass der sicherheitsrelevante Gehäusebereich wenigstens durch die Projektion der Querschnittsgeometrie des Sperrbolzens auf dem Gehäuseteil gebildet sein kann. Befindet sich die Verbindungsstelle innerhalb des sicherheitsrelevanten Gehäusebereiches, ist eine Entnahme des Sperrbolzens oder zumindest eine Überführung des Sperrbolzens von der Sperrstellung in die Freigabestellung nicht möglich, ohne zuvor den Rückhaltearm von der Rückhaltestellung in die Eingriffsstellung zum Eingriff in die Formschlussgeometrie zu überführen. Es sind Manipulationstechniken bekannt, die beispielsweise durch ein mehrfaches Anbohren des sicherheitsrelevanten Gehäusebereiches den rückwärtigen Bereich hinter dem Sperrbolzen freilegen können. Wird jedoch diese Manipulationstechnik bei einer Sperrvorrichtung mit der erfindungsgemäßen Anordnung des Rückhaltearms über die Verbindungsstelle mit dem Gehäuseteil innerhalb des sicherheitsrelevanten Gehäusebereiches angewendet, erfolgt schon während des Aufbruches des Gehäuseteils innerhalb des sicherheitsrelevanten Bereiches eine Lösung der Wirkverbindung zwischen dem Rückhaltearm und dem Sicherungselement, woraufhin das Sicherungselement von der Rückhaltestellung in die Eingriffsstellung schnappt. Im Ergebnis ergibt sich eine wesentliche Verbesserung der Sicherheit gegen eine Manipulation der Sperrvorrichtung zur Überführung des Sperrbolzens von der Sperrstellung in die Freigabestellung.

Der sicherheitsrelevante Gehäusebereich muss nicht grundsätzlich auf den Bereich beschränkt sein, der den rückwärtigen Entnahmebereich des Sperrbolzens abdeckt. Insbesondere kann der sicherheitsrelevante Gehäusebereich jeden Bereich des Gehäuseteils oder des Gehäusegrundkörpers betreffen, der durch eine unberechtigte Person erreichbar und folglich manipulierbar ist. Der Gehäuseteil, der den sicherheitsrelevanten Gehäusebereich aufweist, kann einen Gehäusedeckel betreffen, der auf dem Gehäusegrundkörper aufgesetzt ist und diesen verschließt. Durch Ansetzen eines Stemmwerkzeuges kann der Gehäusedeckel im Rahmen einer Manipulation gewaltsam vom Gehäusegrundkörper gelöst werden, sodass der sicherheitsrelevante Bereich beispielsweise auch die Einwirkstelle eines Stemmwerkzeuges auf den Gehäusedeckel betreffen kann.

Gemäß einer bevorzugten Ausführungsform der Sperrvorrichtung kann ein Federelement vorgesehen sein, das derart gegen die Verbindungsstelle gespannt ist, dass bei einer Einwirkung auf den sicherheitsrelevanten Gehäusebereich eine Bewegung des Rückhaltearms aus der Rückhaltestellung unterstützbar ist. Insbesondere kann das Federelement durch eine sich zwischen dem Sperrbolzen und dem sicherheitsrelevanten Gehäusebereich erstreckende Druckfeder gebildet sein, die zugleich den Sperrbolzen in die Sperrstellung vorspannt, wobei die Druckfeder in der Verbindungsstelle zwischen dem Rückhaltearm und dem Gehäuseteil an das Gehäuseteil angrenzt. Wird der sicherheitsrelevante Gehäusebereich durch eine Manipulation gewaltsam entfernt, drückt die Druckfeder die Verbindungsstelle mitsamt dem Rückhaltearm in die vom Sperrbolzen abgewandte Richtung. Im Ergebnis wird der Rückhaltearm auch in dieser Anordnung vom Sicherungselement weggedrückt, so dass sich die rückhaltende Wirkverbindung zwischen dem Rückhaltearm und dem Sicherungselement löst, sodass die Druckfeder eine Doppelfunktion erfüllt. Dadurch wird die Sicherheit der Sperrvorrichtung weiter erhöht, da schon vor der Entnahme des deckelartigen Gehäuseteils bzw. vor der Entnahme wenigstens des sicherheitsrelevanten Gehäusebereiches des Gehäuseteils ein Lösen des Rückhaltearms vom Sicherungselement sichergestellt ist.

Der Rückhaltearm kann einteilig und vorzugsweise materialeinheitlich mit dem Gehäuseteil ausgebildet sein. Beispielsweise kann das Gehäuseteil im Verfahren des Aluminiumdruckgusses oder Magnesiumdruckgusses hergestellt sein, so dass das Gehäuseteil, das überwiegend flächenförmig ausgeführt ist, einteilig mit dem fingerförmig ausgeführten Rückhaltearm ausgebildet werden kann, indem beide Bauteilbereiche in einem Druckgussvorgang hergestellt werden. Der fingerförmige Rückhaltearm erstreckt sich etwa orthogonal auf der Erstreckungsebene des Gehäuseteils, das deckelförmig ausgebildet ist und den topfartigen Gehäusegrundkörper im montierten Zustand verschließt. Folglich erstreckt sich der Rückhaltearm in den Innenraum des Gehäusegrundkörpers hinein.

Nach einer weiteren möglichen Ausführungsform kann der Rückhaltearm durch ein Blechelement oder durch ein Drahtelement gebildet werden, das in der Verbindungsstelle mit dem Gehäuseteil verbunden ist. Das Blechelement oder das Drahtelement kann in der Verbindungsstelle mit dem Gehäuseteil verstemmt, verschraubt, vernietet oder beispielsweise verschweißt oder mit einem Verbindungselement verbunden werden.

Der Rückhaltearm kann insbesondere L-förmig ausgebildet sein und einen parallel zur Hubachse und einen quer zur Hubachse verlaufenden Abschnitt aufweisen. Zur Bewegung des Sperrbolzens kann ein Steuerglied vorgesehen sein, das eine zylinderartige Form besitzt und das sich um die Hubachse des Sperrbolzens herum erstreckt. Die Druckfeder zwischen dem Sperrbolzen und dem deckelartigen Gehäuseteil erstreckt sich ebenfalls in der Hubachse, so dass die Verbindungsstelle zwischen dem Rückhaltearm und dem Gehäuseteil etwa mittig über dem Steuerglied angeordnet ist. Folglich weist der Rückhaltearm einen ersten L-Schenkel auf, um diesen von der Verbindungsstelle und damit aus der Mitte des Steuergliedes herauszuführen und um in den zweiten L-Schenkel überzugehen, der den Abschnitt des Rückhaltearms bildet, der seitlich am Steuerglied entlanggeführt wird und parallel beabstandet zur Hubachse verläuft.

Um sicherzustellen, dass das Sicherungselement bei Lösen der rückhaltenden Wirkverbindung mit dem Rückhaltearm in die Eingriffsstellung des Sperrbolzens in die Formschlussgeometrie überführt wird, ist ein Federelement vorgesehen, das das Sicherungselement in Richtung zum Eingriff in die Formschlussgeometrie vorspannt. Die Formschlussgeometrie kann in Gestalt einer nutartigen oder taschenartigen Vertiefung im Sperrbolzen ausgeführt sein, wobei auch ein Vorsprung am Sperrbolzen eine entsprechende Formschlussgeometrie bilden kann. Auf der dem Sperrbolzen abgewandten Seite besitzt das Sicherungselement einen Vorsprung, der tellerförmig ausgeführt sein kann. Die rückhaltende Wirkverbindung zwischen dem Rückhaltearm und dem Sicherungselement erfolgt über den Vorsprung am Sicherungselement, so dass das Federelement den Vorsprung des Sicherungselementes gegen ein freies Ende des Rückhaltearmes andrückt. Wird der Rückhaltearm aus der rückhaltenden Wirkverbindung mit dem Vorsprung gelöst, drückt das Federelement das Sicherungselement in die Formschlussgeometrie innerhalb des Sperrbolzens.

Das Sicherungselement kann in einer sich senkrecht zur Hubachse erstreckenden Bewegungsachse zwischen der Eingriffsstellung und der Rückzugsstellung beweglich aufgenommen sein. Da sich der Rückhaltearm wenigstens teilweise parallel zur Hubachse des Sperrbolzens erstreckt, läuft dieser im Wesentlichen senkrecht auf die Bewegungsachse des Sicherungselementes und damit auf die Erstreckungsachse des Sicherungselementes zu. Das Sicherungselement kann im Wesentlichen rotationssymmetrisch um die Bewegungsachse ausgeführt sein, und der Vorsprung am Sicherungselement besitzt eine tellerförmige Struktur, die sich ebenfalls rotationssymmetrisch um die Bewegungsachse herum erstreckt.

Das freie Ende des Rückhaltearms kann dabei derart mit dem Sicherungselement wirkverbunden sein, dass sich das Sicherungselement dann von der Rückhaltung durch den Rückhaltearm löst und durch das Federelement in die Eingriffsstellung zum Eingriff in die Formschlussgeometrie überführt wird, wenn der Rückhaltearm in Richtung zum Sicherungselement hin oder vom Sicherungselement weg bewegt wird. Damit ist eine Wirkverbindung zwischen dem Rückhaltearm und dem Sicherungselement geschaffen, die sowohl in der einen Bewegungsrichtung des Rückhaltearms als auch in der anderen Bewegungsrichtung des Rückhaltearms etwa parallel zur Hubachse sicher gelöst wird. Wird beispielsweise durch ein Bohrwerkzeug der sicherheitsrelevante Gehäusebereich im deckelartigen Gehäuseteil angebohrt, kann der Rückhaltearm durch das Bohrwerkzeug bereits in Richtung zum Sicherungselement gedrückt werden. Durch die erfindungsgemäße Wirkverbindung zwischen dem Rückhaltearm und dem Sicherungselement wird auch dann eine Lösung der Wirkverbindung und ein Bewegen des Sicherungselementes in Eingriff in die Formschlussgeometrie erreicht, wenn der Rückhaltearm in Richtung zum Sicherungselement gedrückt wird. Folglich erfolgt ein Einschnappen des Sicherungselementes in die Formschlussgeometrie nicht nur bei Entnahme des Rückhaltearms in Richtung zum Gehäuseteil, sondern auch durch Bewegen des Rückhaltearms in Richtung zum Sicherungselement.

Das freie Ende des Rückhaltearms kann hierzu einen ersten Durchbruch und einen zweiten Durchbruch aufweisen, wobei die Durchbrüche über eine stegartige Engstelle miteinander verbunden sind. Die Durchbrüche sind dabei derart in das freie Ende eingebracht, dass der vorzugsweise tellerförmig ausgebildete Vorsprung bei Bewegen des Rückhaltearms in Richtung zum Sicherungselement hin durch den ersten Durchbruch und bei Bewegen des Rückhaltearms vom Sicherungselement weg durch den zweiten Durchbruch hindurch gelangen kann, so dass das Sicherungselement durch das Federelement jeweils in die Eingriffsstellung zum Eingriff in die Formschlussgeometrie im Sperrbolzen überführt wird.

Die Durchbrüche innerhalb des freien Endes des Rückhaltearms bilden Durchgänge, die so bemessen sind, dass der tellerförmig ausgebildete Vorsprung am Sicherungselement durch die Durchbrüche hindurch gelangen kann. Bei Überdeckung der Mittelachse der Durchbrüche mit der Bewegungsachse und folglich mit der Symmetrieachse des Sicherungselementes kann das Federelement das Sicherungselement jeweils in die Formschlussgeometrie im Sperrbolzen hineindrücken.

Nach einer weiteren vorteilhaften Ausführungsform kann ein Zwischenelement vorgesehen sein, das ein freies Ende der zurückhaltenden Wirkverbindung mit dem Sicherungselement aufweist, und das in Erstreckungsrichtung des Rückhaltearms beweglich in der Sperrvorrichtung aufgenommen ist, wobei das Zwischenelement mittels eines Federelementes in die Bewegungsrichtung vorgespannt ist, in der sich die rückhaltende Wirkverbindung zwischen dem Sicherungselement und dem Zwischenelement löst. Das Zwischenelement bildet dabei eine Art Verlängerung des Rückhaltearms, wobei das Zwischenelement eine Kontaktfläche aufweist, an die der Rückhaltearm angrenzt und das Zwischenelement in rückhaltender Wirkverbindung mit dem Sicherungselement hält.

Befindet sich das Gehäuseteil im geschlossenen Zustand auf dem Gehäusegrundkörper, drückt der fingerförmige Rückhaltearm auf die Kontaktfläche des Zwischenelementes. Dabei ersetzt das freie Ende des Zwischenelementes das freie Ende des Rückhaltearms zur Wirkverbindung mit dem Vorsprung am Sicherungselement.

Vorzugsweise kann die Kontaktfläche am Zwischenelement in Richtung zum Rückhaltearm konvex ausgeführt sein. Erfolgt eine Manipulation des Gehäuseteils der Sperrvorrichtung und wird der fingerförmige Rückhaltearm zumindest teilweise aus der Lage parallel zur Hubachse des Sperrbolzens herausgeführt, kann das freie Ende des Rückhaltearms auf der balligen, konvexen Kontaktfläche des Zwischenelementes abgleiten. Da das Zwischenelement durch ein Federelement in die Richtung vorgespannt ist, die zum Lösen der rückhaltenden Wirkverbindung zwischen dem Zwischenelement und dem Sicherungselement führt, genügt eine leichte Bewegung des Rückhaltearms, um das Zwischenelement vom Sicherungselement zu lösen, so dass das Sicherungselement in Eingriff mit dem Sperrbolzen gelangt. Um eine hinreichend große Kontaktfläche am Zwischenelement zu bilden, kann dieser in Gestalt eines Pilzes oder eines Niet ausgeführt sein, und einen schaftartigen Fortsatz besitzen, der an einem tellerartigen Kopfabschnitt angeformt ist. Oberseitig auf dem Kopflabschnitt ist die Kontaktfläche aufgebracht, die in Richtung zum Rückhaltearm gewölbt ausgebildet ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel einer Sperrvorrichtung in einer Draufsicht, wobei der Gehäuseteil mit dem sicherheitsrelevanten Gehäusebereich entnommen ist,
- Figur 2: eine Seitenansicht eines Ausführungsbeispiels einer Sperrvorrichtung mit einem Sperrbolzen, der sich in der Freigabestellung befindet,
- Figur 3a: eine Seitenansicht eines Ausführungsbeispiels einer Sperrvorrichtung mit einem Sperrbolzen, der sich in der Sperrstellung befindet,
- Figur 3b: eine Seitenansicht eines Ausführungsbeispiels einer Sperrvorrichtung mit einer Verbindungsstelle zwischen dem Rückhaltearm und dem Gehäuseteil mit Aufnahme einer Druckfeder in der Verbindungsstelle,
- Figur 3c: ein Ausführungsbeispiel einer Sperrvorrichtung mit einem Rückhaltearm, das als Blechelement ausgeführt ist und durch ein Verbindungselement mit dem Gehäuseteil verbunden ist,
- Figur 4: eine schematische Darstellung eines aufgebrochenen Gehäuseteils, so dass die Wirkverbindung zwischen dem Rückhaltearm und dem Sicherungselement gelöst ist,
- Figur 5a: ein erstes Ausführungsbeispiel des freien Endes des Rückhaltearms zur Wirkverbindung mit dem Sicherungselement,
- Figur 5b: ein zweites Ausführungsbeispiel des freien Endes des Rückhaltearms zur Wirkverbindung mit dem Sicherungselement und
- Figur 5c: ein drittes Ausführungsbeispiel des freien Endes des Rückhaltearms zur Wirkverbindung mit dem Sicherungselement.

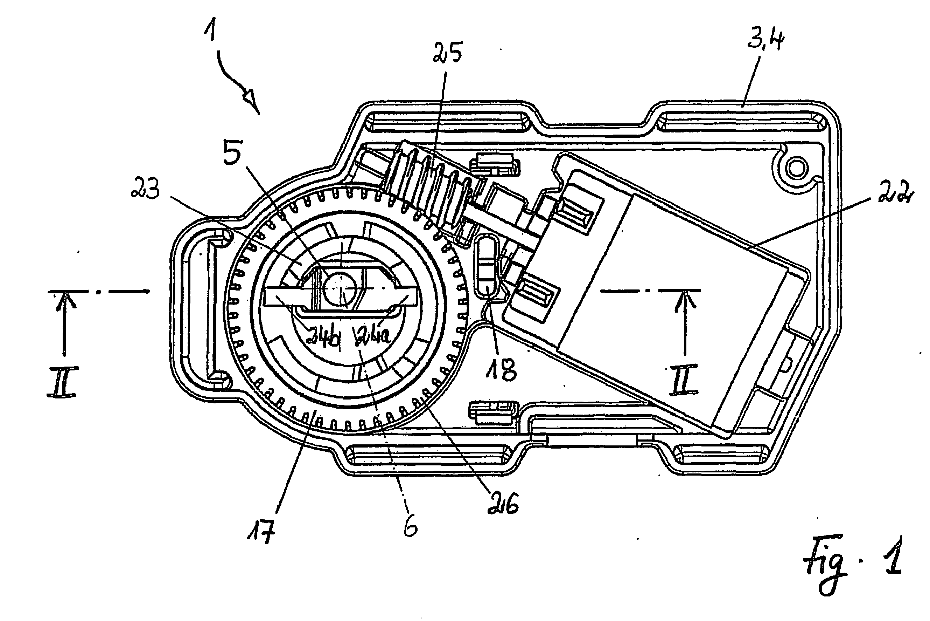

Figur 1 zeigt ein Ausführungsbeispiel einer Sperrvorrichtung 1, wobei das Gehäuse geöffnet ist und lediglich durch den Gehäusegrundkörper 4 in der Ansicht gezeigt ist. Im Gehäusegrundkörper 4 der Sperrvorrichtung 1 ist ein Sperrbolzen 5 aufgenommen, der in einer senkrecht zur Bildebene angeordneten Hubachse 6 beweglich im Gehäusegrundkörper 4 aufgenommen ist. Um den Sperrbolzen 5 zwischen einer Sperrstellung und einer Freigabestellung in der Hubachse 6 zu bewegen, ist ein Steuerglied 17 vorgesehen. Das Steuerglied 17 ist topfartig ausgeführt und besitzt eine Innenkontur mit einer gewindeartigen Führungsstruktur 23, in die jeweilige Vorsprünge 24a und 24b des Sperrbolzens 5 eingreifen. Wird das Steuerglied 17 in Rotation versetzt, laufen die Vorsprünge 24a und 24b des Sperrbolzens 5 auf den gewindeartigen Führungsstrukturen 23 entlang, so dass durch die Drehbewegung des Steuergliedes 17 im Sperrbolzen 5 eine Hubbewegung erzeugt wird.

Um die Drehbewegung im Steuerglied 17 hervorzurufen, ist ein Motor 22 vorgesehen. Der Motor 22 treibt über eine Schnecke 25 ein Schneckenrad 26 an, das außenseitig am Steuerglied 17 vorhanden ist. Zwischen dem Motor 22 und dem Steuerglied 17 ist ein Führungskanal 18 gezeigt, durch den ein Rückhaltearm hindurchgeführt werden kann, der am nicht gezeigten Gehäuseteil 3a angeordnet ist, wie dies in den folgenden Figuren gezeigt ist.

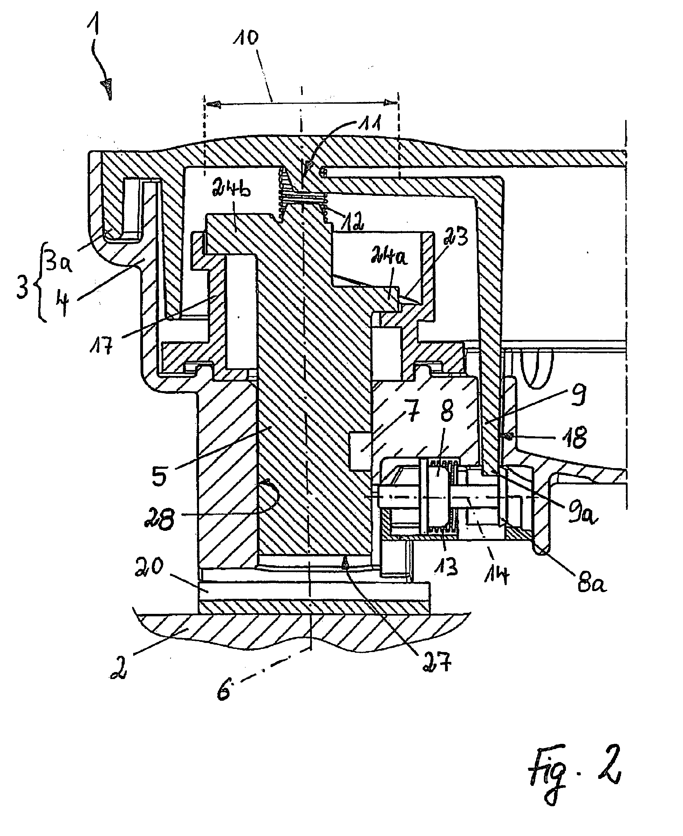

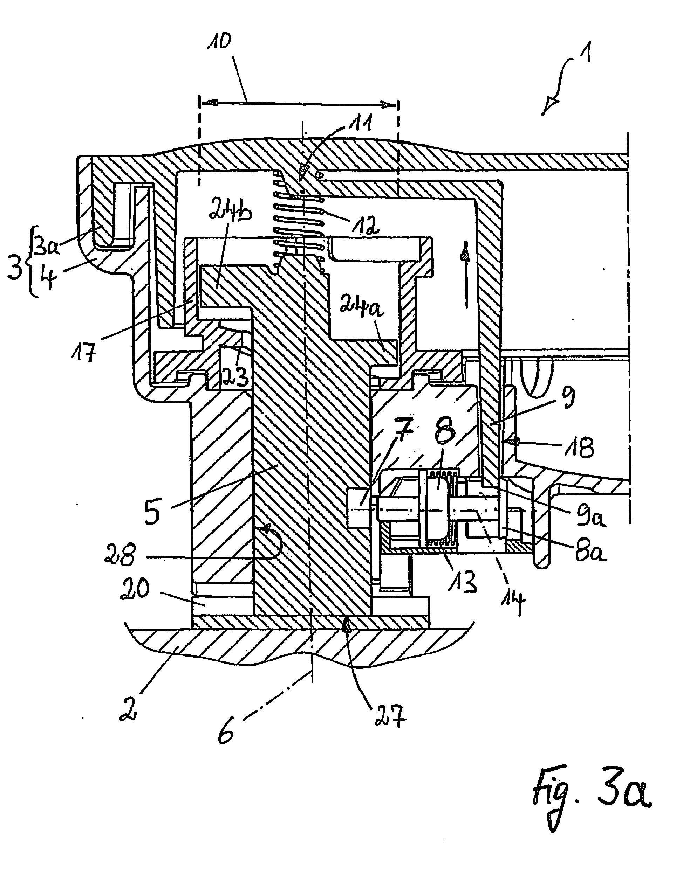

Die Figuren 2 und 3a zeigen jeweils eine Schnittansicht der Sperrvorrichtung 1 gemäß der Schnittebene II-II aus Figur 1. Die Schnittansicht stellt den Gehäusegrundkörper 4 dar, der gemeinsam mit dem oberseitig aufgebrachten, deckelartig ausgebildeten Gehäuseteil 3a das Gehäuse 3 der Sperrvorrichtung 1 bildet. Im Gehäusegrundkörper 4 ist der Sperrbolzen 5 entlang der Hubachse 6 beweglich aufgenommen, wobei der Sperrbolzen 5 in Figur 2 in der Freigabestellung und in der Figur 3a in der Sperrstellung gezeigt ist, so dass das Eingriffsende 27 in Figur 2 nicht in die Nut 20 der Lenkspindel 2 eingreift und in Figur 3a in der Eingriffssituation gezeigt ist. Weiterhin ist das Steuerglied 17 mit der gewindeartigen Führungsstruktur 23 gezeigt, in die die Vorsprünge 24a und 24b des Sperrbolzens 5 in Eingriff stehen, so dass bei Rotation des Steuergliedes 17 um die Hubachse 6 die Hubbewegung im Sperrbolzen 5 hervorgerufen werden kann.

In einer Bewegungsachse 14 ist ein Sicherungselement 8 beweglich im Gehäusegrundkörper 4 aufgenommen. Die Bewegungsachse 14 ist senkrecht zur Hubachse 6 angeordnet, wobei eine Formschlussgeometrie 7 in Gestalt einer Vertiefung im Sperrbolzen 5 eingebracht ist, die mit der Bewegungsachse 14 fluchten kann, wenn sich der Sperrbolzen 5 in der Sperrstellung befindet, siehe Figur 3a. Das Sicherungselement 8 ist mittels eines Federelementes 13 in Richtung zum Eingriff in die Formschlussgeometrie 7 vorgespannt, wobei das Sicherungselement 8 entgegen der Federvorspannung des Federelementes 13 aus der Formschlussgeometrie 7 zurückgehalten wird, indem ein freies Ende 9a eines Rückhaltearms 9 gegen einen Vorsprung 8a des Sicherungselementes 8 rückhaltend zur Anlage gebracht ist. Der Vorsprung 8a ist tellerförmig am Sicherungselement 8 ausgebildet, wobei lediglich das freie Ende 9a des Rückhaltearms 9 gegen einen Teilbereich des Vorsprungs 8a zur Anlage gebracht ist.

Wird der Rückhaltearm 9 in Richtung zum Gehäuseteil 3a aus dem Führungskanal 18 zurückgezogen, drückt das Federelement 13 das Sicherungselement 8 in die Formschlussgeometrie 7 des Sperrbolzens 5, wenn sich dieser in der Sperrstellung befindet.

Der Rückhaltearm 9 ist über eine Verbindungsstelle 11 mit dem Gehäuseteil 3a verbunden. Die Verbindungsstelle 11 zur Anordnung des Rückhaltearms 9 am Gehäuseteil 3a ist innerhalb eines sicherheitsrelevanten Gehäusebereiches 10 angeordnet. Der sicherheitsrelevante Gehäusebereich 10 ist durch die Projektion der Querschnittsgeometrie des Sperrbolzens 5 auf dem Gehäuseteil 3a gebildet. Gemäß der Darstellung ist der sicherheitsrelevante Gehäusebereich 10 beispielhaft als kreisförmig ausgebildeter Bereich oberhalb des Sperrbolzens 5 gezeigt. Bei einem gewaltsamen Öffnen wenigstens eines Teilbereiches des Gehäuseteils 3a, der durch den sicherheitsrelevanten Gehäusebereich 10 definiert ist, wird zugleich die Anordnung des Rückhaltearms 9 insbesondere relativ zum Sicherungselement 8 verändert. Wird der Gehäuseteil 3a aufgebrochen, wird der Rückhaltearm 9 gleichzeitig in die vom Sicherungselement 8 abgewandte Seite bewegt. Folglich löst sich die Wirkverbindung des freien Endes 9a des Rückhaltearms 9 vom Vorsprung 8a des Sicherungselementes 8. Folglich kann das Sicherungselement 8 in die Formschlussgeometrie 7 gelangen, sofern sich der Sperrbolzen 5 in der Sperrstellung befindet, siehe Figur 3a.

Der Rückhaltearm 9 ist einteilig mit dem Gehäuseteil 3a ausgebildet und lediglich über die Verbindungsstelle 11 mit diesem verbunden. Die Verbindungsstelle 11 weist vorzugsweise einen geringen Querschnitt auf, der den Rückhaltearm 9 mit dem Gehäuseteil 3a verbindet. Die Querschnittsfläche der Verbindungsstelle 11 entspricht lediglich einer Teilfläche der Projektionsfläche des Sperrbolzens 5 auf dem Gehäuseteil 3a. Der Rückhaltearm 9 besitzt eine L-förmige Gestalt mit einem ersten L-Schenkel, der senkrecht zur Hubachse 6 verläuft und in einen parallel zur Hubachse 6 verlaufenden weiteren L-Schenkel übergeht. Die L-Form des Rückhaltearms 9 dient dazu, einen Umgriff um das Steuerglied 17 zur Hubbewegung des Sperrbolzens 5 zu schaffen.

Zwischen dem Gehäuseteil 3a und dem Sperrbolzen 5 befindet sich eine Druckfeder 12, die den Sperrbolzen 5 in die Sperrstellung vorspannt. Dabei kann die Verbindungsstelle 11 konzentrisch zur Erstreckungsrichtung der Druckfeder 12 angeordnet sein. Würde der Sperrbolzen 5 aus dem Sperrbolzenkanal 28 herausgenommen, muss zunächst die Druckfeder 12 entfernt werden, was ohne eine Entnahme des Rückhaltearms 9 durch die Anordnung der Verbindungsstelle 11 am Gehäuseteil 3a nicht möglich ist. Sobald der Rückhaltearm 9 in gezeigter Pfeilrichtung bewegt wird, löst sich die Wirkverbindung zwischen dem freien Ende 9a des Rückhaltearms 9 und dem Vorsprung 8a des Sicherungselementes 8.

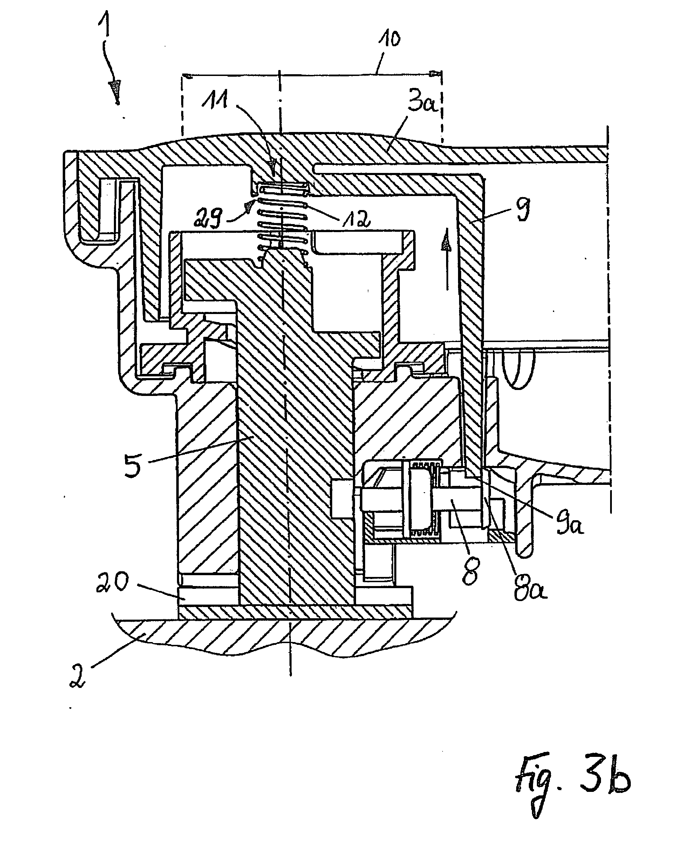

In Figur 3b ist eine weitere Ansicht der Sperrvorrichtung 1 gezeigt, wobei sich der Sperrbolzen 5 wiederum in der Sperrstellung und folglich im Eingriff mit der Nut 20 der Lenkspindel 2 befindet. Die Druckfeder 12 ist auf der Seite des Gehäuseteils 3a in einer Federaufnahme 29 aufgenommen, die in der Verbindungsstelle 11 zur Verbindung des Rückhaltearms 9 am Gehäuseteil 3a ausgebildet ist. Damit wird eine weitere Ausgestaltung der Verbindungsstelle 11 aufgezeigt, die derart vorgesehen ist, dass der Rückhaltearm 9 bei einer Manipulation des Gehäuseteils 3a im sicherheitsrelevanten Gehäusebereich 10 eine Bewegung in Richtung des gezeigten Pfeils ausführt, so dass das freie Ende 9a des Rückhaltearms 9 vom Vorsprung 8a des Sicherungselementes 8 gelöst wird.

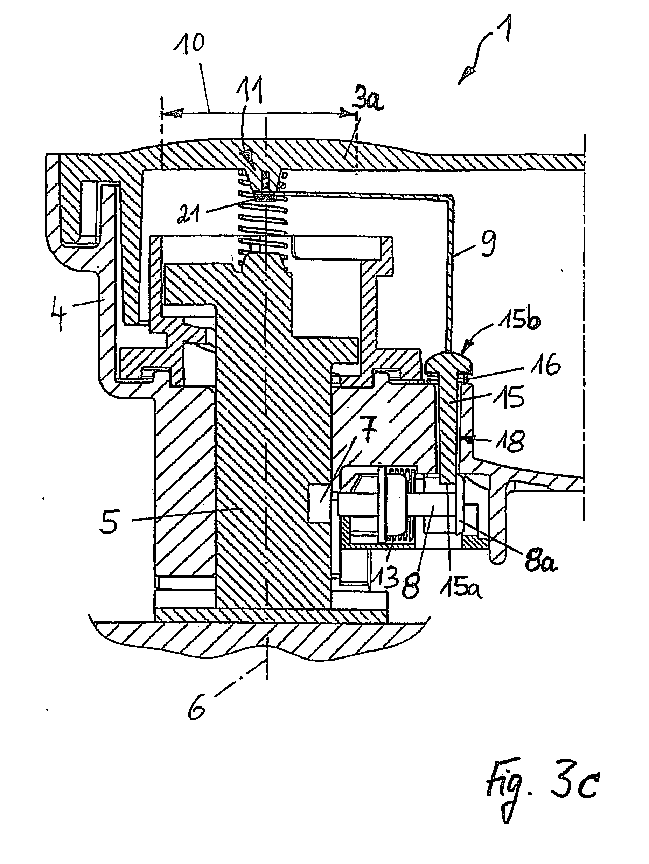

Figur 3c zeigt eine Querschnittsansicht der Sperrvorrichtung 1 mit einem Rückhaltearm 9, der als Blechelement oder als Drahtelement ausgeführt ist. Der Rückhaltearm 9 ist über ein Verbindungselement 21 mit dem Gehäuseteil 3a verbunden, das die Verbindungsstelle 11 zwischen dem Rückhaltearm 9 und dem Gehäuseteil 3a bildet. Die Wirkverbindung zwischen dem Rückhaltearm 9 und dem Sicherungselement 8 umfasst gemäß diesem Ausführungsbeispiel ein Zwischenelement 15, das hubbeweglich im Führungskanal 18 des Gehäusegrundkörpers 4 aufgenommen ist. Das Zwischenelement 15 besitzt wiederum ein freies Ende 15a, das gemäß der Darstellung mit dem Vorsprung 8a des Sicherungselementes 8 zusammenwirkt, um das Sicherungselement 8 entgegen der Federwirkung des Federelementes 13 aus der Formschlussgeometrie 7 im Sperrbolzen 5 zurückzuhalten.

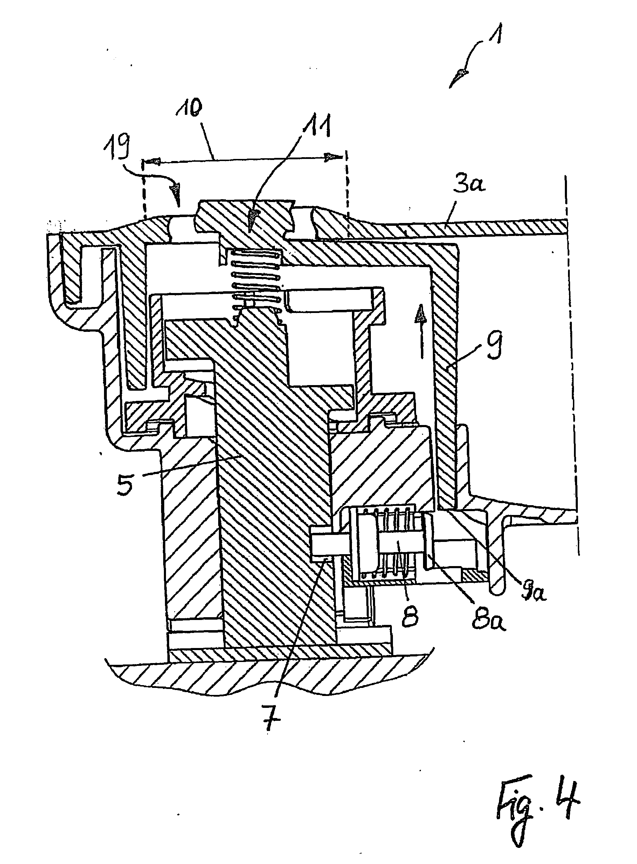

Gemäß der Darstellung drückt der Rückhaltearm 9 mit seinem parallel zur Hubachse 6 verlaufenden L-Schenkel auf die Kontaktfläche 15b des Zwischenelementes 15. Die Kontaktfläche 15b ist in Richtung zum Rückhaltearm 9 konvex ausgeführt. Erfolgt eine Manipulation im sicherheitsrelevanten Gehäusebereich 10 des Gehäuseteils 3a, und wird die Verbindungsstelle 11 gelöst oder zumindest in ihrer Lage verändert, rutscht der fingerförmige Rückhaltearm 9 von der ballig ausgeführten Kontaktfläche 15b ab, und das Zwischenelement 15 wird durch ein Federelement 16, das sich zwischen dem Kopfbereich des Zwischenelementes 15 und dem Gehäusegrundkörper 4 erstreckt, aus der Wirkverbindung mit dem Sicherungselement 8 gelöst. Damit kann eine sichere Blockierung des Sperrbolzens 5 in der gezeigten Sperrstellung erfolgen, sofern auch nur eine geringfügige Änderung der Lage des Rückhaltearms 9 aus der gezeigten Lage erfolgt. Eine derartige Freigabe des Sicherungselementes 8 zum Eingriff in die Formschlussgeometrie 7 im Sperrbolzen 5 ist in Figur 4 gezeigt.

Figur 4 zeigt eine Querschnittsansicht der Sperrvorrichtung 1 mit einem manipulierten Gehäuseteil 3a. Die Darstellung zeigt einen aufgebrochenen Bereich des Gehäuseteils 3a innerhalb des sicherheitsrelevanten Gehäusebereiches 10. Der Teil des Gehäuseteils 3a, der die Verbindungsstelle 11 umfasst, wurde vom restlichen Gehäuseteil 3a beispielsweise durch einen radial um die Verbindungsstelle 11 herum angeordneten Aufbruch gelöst. Dabei ist eine Bewegung erfolgt, die die Verbindungsstelle 11 vom Sperrbolzen 5 wegbewegt, was durch die Druckwirkung der Druckfeder 12 unterstützt wird. Folglich bewegt sich der Rückhaltearm 9 vom Sicherungselement 8 weg, so dass die rückhaltende Wirkverbindung des freien Endes 9a des Rückhaltearms 9 vom Vorsprung 8a des Sicherungselementes 8 gelöst wird. Im Ergebnis schnappt das Sicherungselement 8 in die Formschlussgeometrie 7 des Sperrbolzens 5 ein, so dass dieser aus der gezeigten Sperrstellung nicht entnommen werden kann. Auch bei einem freigelegten rückwärtigen Bereich des Gehäuseteils 3a rückseitig des Sperrbolzens 5 kann dieser aus der gezeigten Stellung nicht entnommen werden, da die Entnahme durch das Sicherungselement 8 verhindert ist.

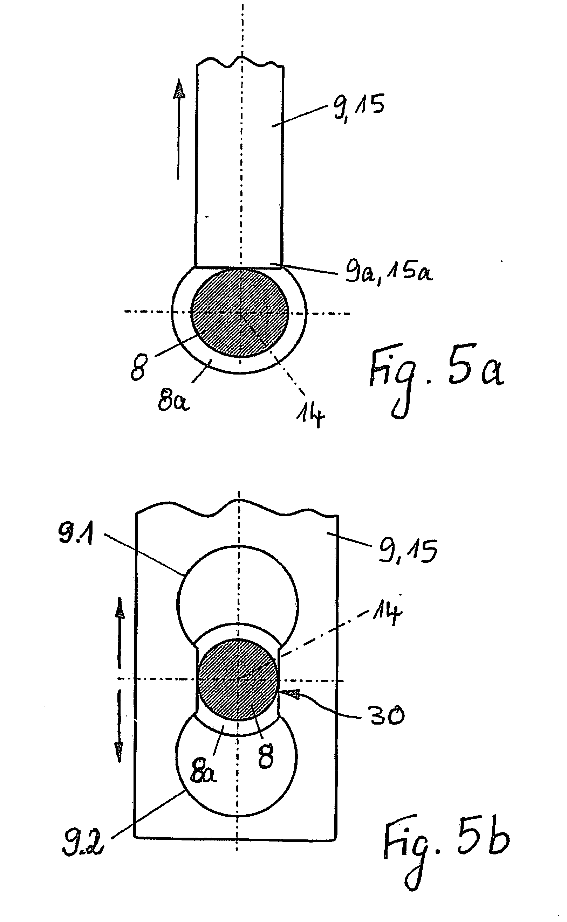

Figur 5a zeigt ein erstes Ausführungsbeispiel einer Eingriffssituation des Rückhaltearms 9 bzw. des Zwischenelementes 15 in den Vorsprung 8a des Sicherungselementes 8 aus Blickrichtung der Bewegungsachse 14. Der Vorsprung 8a ist tellerförmig ausgebildet und erstreckt sich radial symmetrisch um die Bewegungsachse 14 herum. Das freie Ende 9a bzw. 15a des Rückhaltearms 9 bzw. des Zwischenelementes 15 ist zungenförmig ausgebildet und bildet für einen Teilbereich des tellerförmigen Vorsprungs 8a einen Anschlag. Damit kann das Sicherungselement 8 nicht entlang der Bewegungsachse 14 bewegt werden, solange der Rückhaltearm 9 bzw. das Zwischenelement 15 nicht in gezeigter Pfeilrichtung bewegt wird.

Figur 5b zeigt hingegen ein Ausführungsbeispiel, in dem das freie Ende 9a bzw. 15a des Rückhaltearms 9 bzw. des Zwischenelementes 15 derart ausgestaltet ist, dass eine Freigabe des Sicherungselementes 8 zur Bewegung entlang der Bewegungsachse 14 sowohl in einer aufwärts gerichteten Bewegung des Rückhaltearms 9 bzw. des Zwischenelementes 15 als auch in einer abwärts gerichteten Bewegung ermöglicht ist. Dafür besitzt das freie Ende 9a bzw. 15a einen ersten Durchbruch 9.1 und einen zweiten Durchbruch 9.2, die über eine Engstelle 30 miteinander verbunden sind.

In der gezeigten Position des Rückhaltearms 9 bzw. des Zwischenelementes 15 wird die Bewegung des Sicherungselementes 8 entlang der Bewegungsachse 14 verhindert, da die Engstelle 30 mit dem Vorsprung 8a des Sicherungselementes 8 rückhaltend in Verbindung steht. Die ersten und zweiten Durchbrüche 9.1 und 9.2 sind in der geometrischen Ausgestaltung derart ausgeführt, dass der Vorsprung 8a vollständig durch die Durchbrüche 9.1 oder 9.2 hindurch geführt werden kann. Daraus folgt, dass der Rückhaltearm 9 bzw. das Zwischenelement 15 sowohl in einer Richtung zum Gehäuseteil 3a hin oder vom Gehäuseteil 3a weg bewegt werden kann, so dass in beiden Bewegungsrichtungen eine Blockierung des Sperrbolzens 5 durch das Sicherungselement 8 erfolgt.

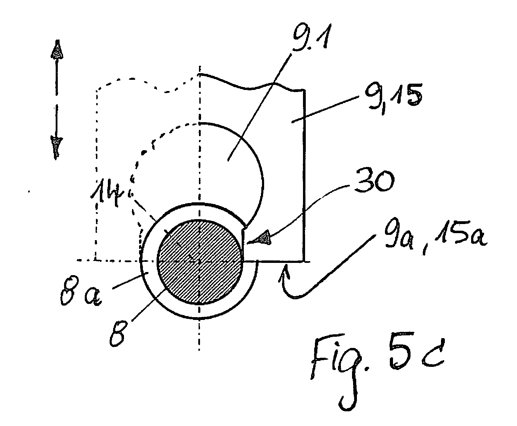

Figur 5c zeigt ein weiteres Ausführungsbeispiel des freien Endes 9a bzw. 15a des Rückhaltearms 9 bzw. des Zwischenelementes 15 in Wirkverbindung mit dem Sicherungselement 8 und dem daran vorhandenen Vorsprung 8a, wobei das freie Ende 9a derart ausgestaltet ist, dass eine Freigabe des Sicherungselementes 8 zur Bewegung entlang der Bewegungsachse 14 auch nach diesem Ausführungsbeispiel sowohl in einer aufwärts gerichteten Bewegung des Rückhaltearms 9 bzw. des Zwischenelementes 15 als auch in einer abwärts gerichteten Bewegung ermöglicht ist. Das freie Ende 9a weist lediglich den ersten Durchbruch 9.1 auf, wobei nur eine Seite mit einer Engstelle 30 gezeigt ist und das freie Ende 9a selbstverständlich auch symmetrisch ausgeführt sein kann, was in einer Schattenlinie in gestrichelter Form angedeutet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile einschließlich konstruktiven Einzelheiten, räumliche Anordnungen und Verfahrensschritte, können sowohl für sich als auch in den verschiedensten Kombinationen erfindungswesentlich sein. Insbesondere kann jede der gezeigten Ausgestaltungen der Verbindungsstelle 11 sowohl mit einem Zusammenwirken des Rückhaltearms 9 mit einem Zwischenelement 15 oder eine direkte Wirkverbindung des Rückhaltearms 9 mit dem Sicherungselement 8 vorgesehen sein. Ferner kann die gezeigte Manipulation des sicherheitsrelevanten Gehäusebereiches 10 durch jedes beliebige Werkzeug erfolgen, so dass beispielsweise die Verbindungsstelle 11 auch von der Außenseite des Gehäuseteils 3a durch ein Bohrwerkzeug aufgebohrt werden kann. Unabhängig von der Art der Manipulation besteht der Kern der Erfindung darin, den Rückhaltearm 9 derart mit dem Gehäuseteil 3a zu verbinden, dass grundsätzlich eine Blockierung des Sperrbolzens 5 durch das Sicherungselement 8 sichergestellt ist.

### Bezugszeichenliste

- 1: Sperrvorrichtung
- 2: funktionswesentliches Bauteil, Lenkspindel
- 3: Gehäuse
- 3a: Gehäuseteil
- 4: Gehäusegrundkörper
- 5: Sperrbolzen
- 6: Hubachse
- 7: Formschlussgeometrie
- 8: Sicherungselement
- 8a: Vorsprung
- 9: Rückhaltearm
- 9.1: erster Durchbruch
- 9.2: zweiter Durchbruch
- 9a: freies Ende
- 10: sicherheitsrelevanter Gehäusebereich
- 11: Verbindungsstelle
- 12: Druckfeder
- 13: Federelement
- 14: Bewegungsachse
- 15: Zwischenelement
- 15a: freies Ende
- 15b: Kontaktfläche
- 16: Federelement
- 17: Steuerglied
- 18: Führungskanal
- 19: Bruchstelle
- 20: Nut
- 21: Verbindungselement
- 22: Motor
- 23: gewindeartige Führungsstruktur
- 24a: Vorsprung
- 24b: Vorsprung
- 25: Schnecke
- 26: Schneckenrad
- 27: Eingriffsende
- 28: Sperrbolzenkanal
- 29: Federaufnahme
- 30: Engstelle

## Patentansprüche

1. Sperrvorrichtung (1) zum Sperren eines funktionswesentlichen Bauteils (2) eines Kraftfahrzeugs, insbesondere zur Sperrung einer Lenkspindel (2),
wobei die Sperrvorrichtung (1) einen in einem Gehäuse (3) der Sperrvorrichtung (1) aufgenommenen Sperrbolzen (5) aufweist, der In einer Hubachse (6) zwischen einer Sperrstellung zur Sperrung des funktionswesentlichen Bauteils (2) und einer Freigabestellung zur Freigabe des funktionswesentlichen Bauteils (2) beweglich ist,
wobei der Sperrbolzen (5) in der Sperrstellung mittels einem mit einer Formschlussgeometrie (7) des Sperrbolzens (5) zusammenwirkenden, im Gehäuse (3) beweglich gelagerten Sicherungselement (8) blocklerbar ist,
wobei ein Rückhattearm (9) zur Rückhaltung des Sicherungselementes (8) aus dem Eingriff in der Formschlussgeometrie (7) vorgesehen ist,
derart, dass bei Bewegung des Rückhaltearmes (9) aus der Rückhaltertellung das Sicherungselement (8) in Eingriff in die Formschlussgeometrie (7) gelangt und ein Lösen des Sperrbolzens (5) aus der Sperrstellung heraus verhindert ist,
wobei das Gehäuse (3) einen Gehäuseteil (3a) mit einem sicherheitsrelevanten Gehäusebereich (10) aufweist,
wobei .der Rückhaltearm (9) mit dem Gehäuseteil (3a) eine Verbindungsstelle (11) aufweist, die wenigstens teilweise innerhalb des sicherheltsrelevanten Gehäusebereiches (10) angeordnet ist,
**dadurch gekennzeichnet,**
**dass** der sicherheitsrelevante Gehäusebereich (10) um die Hubachse (6) des Sperrbolzens (5) herum gebildet ist und einem rückwärtigen Entnahmebereich des Sperrbolzens (5) entspricht.

2. Sperrvorrichtung (1) nach Anspruch 1,
**dadurch gekennzeichnet,**
**dass** ein Federelement (12) vorgesehen ist und das derart gegen die Verbindungsstelle (11) gespannt ist, dass bei einer Einwirkung auf den sicherheitsrelevanten Gehäusebereich (10) eine Bewegung des Rückhaltearms (9) aus der Rückhaltestellung unterstützbar ist.

3. Sperrvorrichtung (1) nach einem der Ansprüche 1 oder 2,
**dadurch gekennzeichnet,**
**dass** der Sperrbolzen (5) quer zur Hubachse (6) eine Querschnittsgeometrie aufweist, wobei der sicherheitsrelevante Gehäusebereich (10) wenigstens durch die Projektion der Querschnittsgeometrie des Sperrbolzens (5) auf dem Gehäuseteil (3a) gebildet ist.

4. Sperrvorrichtung (1) nach einem der vorgenannten Ansprüche,
**dadurch gekennzeichnet,**
**dass** das Federelement durch eine sich zwischen dem Sperrbolzen (5) und dem sicherheitsrelevanten Gehäusebereich (10) erstreckende Druckfeder (12) gebildet ist, die den Sperrbolzen (5) in die Sperrstellung vorspannt, wobei die Druckfeder (12) gleichermaßen in der Verbindungsstelle (11) an das Gehäuseteil (3a) angrenzt.

5. Sperrvorrichtung (1) nach einem der vorgenannten Ansprüche,
**dadurch gekennzeichnet,**
**dass** der Rückhaltearm (9) einteilig und vorzugsweise materialeinheitlich mit dem Gehäuseteil (3a) ausgebildet ist.

6. Sperrvorrichtung (1) nach einem der Ansprüche 1 bis 4,
**dadurch gekennzeichnet,**
**dass** der Rürkhaltearm (9) durch ein Blechelement oder einen Drahtelement gebildet ist, das In der Verbindungsstelle (11) mit dem Gehauseteil (3a) verbunden ist.

7. Sperrvorrichtung (1) nach einem der vorgenannten Ansprüche,
**dadurch gekennzeichnet,**
**dass** das Sicherungselement (8) mittels eines Federelementes (13) in Richtung zum Eingriff in die Formschlussgeometrie (7) vorgespannt ist und wobei das Sicherungselement (8) einen Vorsprung (8a) aufweist, der gegen ein freies Ende (9a) des Rückhaltearmes (9) rückhaltend zur Anlage gebracht ist.

8. Sperrvorrichtung (1) nach einem der vorgenannten Ansprüche,
**dadurch gekennzeichnet,**
**dass** das Sicherungselement (8) in einer sich senkrecht zur Hubachse (6) erstreckenden Bewegungsachse (14) zwischen der Eingriffsstellung zur Wirkverbindung mit der Formschlussgeometrie (7) und der Rückzugstellung zum Rückzug aus der Wirkverbindung mit der Formschlussgeometrie (7) beweglich ist und wobei sich der Rückhaltearm (9) wenigstens teilweise parallel zur Hubachse (6) des Sperrbolzens (5) und senkrecht zur Bewegungsachse (14) erstreckt.

9. Sperrvorrichtung (1) nach Anspruch 7 oder 8,
**dadurch gekennzeichnet,**
**dass** das freie Ende (9a) des Rückhaltearms (9) derart mit dem Sicherungselement (8) wirkverbunden ist, dass sich das Sicherungselement (8) dann von der Rückhaltung durch den Rückhaltearm (9) löst und durch das Federelement (13) in die Eingriffsstellung zum Eingriff in die Formschlussgeometrie (7) überführbar ist, wenn der Rückhaltearm (9) in Richtung zum Sicherungselement (8) hin oder vom Sicherungselement (8) weg bewegt wird.

10. Sperrvorrichtung (1) nach Anspruch 9,
**dadurch gekennzeichnet,**
**dass** das freie Ende (9a) des Rückhaltearms (9) einen ersten Durchbruch (9.1) und einen zweiten Durchbruch (9.2) aufweist, die derart in das freie Ende (9a) eingebracht sind,
**dass** der vorzugsweise tellerförmig ausgebildete Vorsprungs (8a) bei Bewegen des Rückhaltearmes (9) In Richtung zum Sicherungselement (8) hin durch den ersten Durchbruch (9.1) und bei Bewegen des Rückhaltearmes (9) vom Sicherungselement (8) weg durch den zweiten Durchbruch (9.2) hindurch gelangen kann, um das Sicherungselement (8) durch das Federelement (13) jeweils in die Eingriffsstellung zum Eingriff in die Formschlussgeometrie (7) zu überführen.

11. Sperrvorrichtung (1) nach einem der vorgenannten Ansprüche,
**dadurch gekennzeichnet,**
**dass** ein Zwischenelement (15) vorgesehen ist, das ein freies Ende (15a) zur rückhaltenden Wirkverbindung mir dem Sicherungselement (8) aufweist und das in Erstreckungsrichtung des Rückhaltearmes (9) beweglich in der Sperrvorrichtung (1) aufgenommen Ist, wobei das Zwischenelement (15) mittels eines Federelementes (16) in die Bewegungsrichtung vorgespannt ist, in der sich die rückhaltende Wirkverbindung zwischen dem Sicherungselement (8) und dem Zwischenelement (15) löst.

12. Sperrvorrichtung (1) nach Anspruch 11,
**dadurch gekennzeichnet,**
**dass** das Zwischenelement (15) eine Kontaktfläche (15b) aufweist, an die der Rückhaltearm (9) angrenzt und das Zwischenelement (15) in rückhaltender Wirkverbindung mit dem Sicherungselement (8) hält, wobei die Kontaktfläche (15b) vorzugsweise in Richtung zum Rückhaltearm (9) konvex ausgeführt ist.

13. Sperrvorrichtung (1) nach einem der vorgenannten Ansprüche,
**dadurch gekennzeichnet,**
**dass** der Rürkhaltearm (9) L- förmig ausgebildet ist und einen parallel zur Hubachse (6) und einen quer zur Hubachse (6) verlaufenden Abschnitt aufweist, sodass der Rückhaltearm (9) um ein zur Bewegung des Sperrbolzens (5) vorhandenes Steuerglied (17) herum geführt ist.

## Claims

1. Locking device (1) to lock an operation essential component (2) of a vehicle, particularly for locking a steering shaft (2),
wherein the locking device (1) comprises a lock bolt (5) adjusted in a housing (3) of the locking device (1), moveable along a cam axis (6) between a blocking position to lock the operation essential component (2) and a releasing position to release the operation essential component (2),
wherein the lock bolt (5) is lockable in the locking position via a retaining element (8) pivotally mounted in the housing (3) interacting with a form fitting geometry (7) of the lock bolt (5),
wherein a detention arm (9) is provided for detention of the retaining element (8) out of the engagement in the form fitting geometry (7),
in a way, that during the movement of the detention arm (9) from the detention position the retaining element (8) reaches the engagement in the form fitting geometry (7) and a releasing of the lock bolt (5) out of the locking position is prevented,
wherein the housing (3) comprises a housing component (3a) with a retaining relevant part of the housing (10),
wherein the detention arm (9) comprises an adjunction (11) with the housing component (3a), which is at least partly assembled within the retaining relevant part of the housing. **characterized in that**
the retaining relevant part of the housing (10) is established about a cam axis (6) of the lock bolt (5) and corresponds to a rearward extraction area of the lock bolt (5).

2. Locking device (1) according to claim 1,
**characterized in that**,
that a spring element (12) is provided and is stressed against the junction (11) in a way that during an influence of the retaining relevant part of the housing (10) a movement of the detention arm (9) out of the detention position is supportable.

3. Locking device (1) according to one of the claims 1 or 2,
**characterized in that**,
the lock bolt (5) comprises a cross section geometry lateral to the cam axis (6), whereby the retaining relevant part of the housing (10) is generated at least via a projection of the cross section geometry of the lock bolt (5) at the housing component (3a).

4. Locking device (1) according to one of the preceding claims,
**characterized in that**,
the spring element is established through a compressing spring (12) extending between the lock bolt (5) and the retaining relevant part of the housing (10), prestressing the lock bolt (5) in the blocking position, whereby the compressing spring (12) is similarly adjoining the housing component (3a) in the junction (11).

5. Locking device (1) according to one of the preceding claims,
**characterized in that**,
the detention arm (9) is made of one piece and preferably generated of the same material as the housing component (3a).

6. Locking device (1) according to one of the claims 1 to 4,
**characterized in that**,
the detention arm (9) is generated by a metal sheet element or a conductor element, which is connected in the junction (11) with the housing component (3a).

7. Locking device (1) according to one of the preceding claims,
**characterized in that**,
the retaining element (8) is prestressed in the direction of engagement in the form fitting geometry (7) via a spring element (13) and whereby the retaining element (8) comprises a nose (8a) which is moved up to repress against the ideal edge (9a) of the detention arm (9).

8. Locking device (1) according to one of the preceding claims,
**characterized in that**,
the retaining element (8) is moveable in an axis of movement (14) extending vertical to the cam axis (6) between the engaging position for an operative connection with the form fitting geometry (7) and the detention position for rejection out of the operative connection with the form fitting geometry (7) and whereby the detention arm (9) is extending at least partially parallel to the cam axis (6) of the lock bolt (5) and vertical to the axis of movement (14).

9. Locking device (1) according to claim 7 or 8,
**characterized in that**,
the ideal edge (9a) of the detention arm (9) is operatively connected with the retaining element (8) in a way that the retaining element (8) is releasing from the detention through the detention arm (9) and transferred in the engaging position to engage in the form fitting geometry (7) via the spring element (13), if the detention arm (9) is moved in the direction of the retaining element (8) or away from the retaining element (8).

10. Locking device (1) according to claim 9,
**characterized in that**,
the ideal edge (9a) of the detention arm (9) comprises a first opening (9.1) and a second opening (9.2), which are integrated in the ideal edge (9a) in a way that during movement of the detention arm (9) in the direction of the retaining element (8) a preferably disc-like nose (8a) reaches through the first opening (9.1) and during the movement of the detention arm (9) away from the retaining element (8) it reaches through the second opening (9.2), to transfer the retaining element (8) in each case into the engaging position to engage within the form fitting geometry (7) via the spring element (13).

11. Locking device (1) according to one of the preceding claims,
**characterized in that**,
an intermediate element (15) is provided which comprises a ideal edge (15a) to repress the operative connection with the retaining element (8) and that is moveably accepted in the locking device (1) in the extending direction of the detention arm (9), wherein the intermediate element (15) is repressed in the moving direction using a spring element (16), in which the repressing operative connection between the retaining element (8) and the intermediate element (15) is released.

12. Locking device (1) according to claim 11,
**characterized in that**,
the intermediate element (15) comprises a contact area (15b), at which the detention arm (9) is adjoining and the intermediate element (15) is retained in a repressed operative connection with the retaining element (8), wherein the contact area (15b) is preferably shaped in a convex way in the direction of the detention arm (9).

13. Locking device (1) according to one of the preceding claims,
**characterized in that**,
the detention arm (9) is L-shaped and comprises a section parallel along the cam axis (6) and transverse along the cam axis (6) so that the detention arm (9) is guided along an actuating element (17) for the movement of the lock bolt (5).

## Revendications

1. Dispositif de verrouillage (1) destiné au verrouillage d'un élément fonctionnellement essentiel (2) d'un véhicule automobile, en particulier pour le verrouillage d'un arbre de direction (2),
sachant que le dispositif de verrouillage (1) présente un boulon de verrouillage (5) qui est reçu dans un boîtier (3) du dispositif de verrouillage (1) et qui est mobile suivant un axe de translation (6) entre une position de verrouillage pour verrouiller l'élément fonctionnellement essentiel (2) et une position de libération pour libérer l'élément fonctionnellement essentiel (2),
sachant que le boulon de verrouillage (5) peut être bloqué dans la position de verrouillage au moyen d'un élément d'assujettissement (8) monté à déplacement dans le boîtier (3) et coopérant avec une géométrie d'engagement positif (7) du boulon de verrouillage (5),
sachant qu'un bras de retenue (9) est prévu pour retenir l'élément d'assujettissement (8) désengagé de la géométrie d'engagement positif (7), de telle sorte que, lors du déplacement du bras de retenue (9) hors de la position de retenue, l'élément d'assujettissement (8) s'engage dans la géométrie d'engagement positif (7) et le boulon de verrouillage (5) est empêché de quitter la position de verrouillage,
sachant que le boîtier (3) présente une partie de boîtier (3a) dotée d'une région de boîtier (10) importante pour la sécurité,
sachant que le bras de retenue (9) présente un point (11) de liaison avec la partie de boîtier (3a) qui est disposé au moins pour partie à l'intérieur de la région de boîtier (10) importante pour la sécurité,
**caractérisé en ce que** la région de boîtier (10) importante pour la sécurité est formée tout autour de l'axe de translation (6) du boulon de verrouillage (5) et correspond à une région d'enlèvement arrière du boulon de verrouillage (5).

2. Dispositif de verrouillage (1) selon la revendication 1, **caractérisé en ce qu'**il est prévu un élément de ressort (12) qui est tendu contre le point de liaison (11) de telle sorte que le mouvement du bras de retenue (9) hors de la position de retenue peut être assisté lors d'une action sur la région de boîtier (10) importante pour la sécurité.

3. Dispositif de verrouillage (1) selon la revendication 1 ou 2, **caractérisé en ce que** le boulon de verrouillage (5) présente une géométrie de section transversalement à l'axe de translation (6), sachant que la région de boîtier (10) importante pour la sécurité est formée au moins par la projection de la géométrie de section du boulon de verrouillage (5) sur la partie de boîtier (3a).

4. Dispositif de verrouillage (1) selon l'une des revendications précédentes, **caractérisé en ce que** l'élément de ressort est formé par un ressort de pression (12) qui s'étend entre le boulon de verrouillage (5) et la région de boîtier (10) importante pour la sécurité et qui précontraint le boulon de verrouillage (5) dans la position de verrouillage, sachant que le ressort de pression (12) atteint pareillement la partie de boîtier (3a) au point de liaison (11).

5. Dispositif de verrouillage (1) selon l'une des revendications précédentes, **caractérisé en ce que** le bras de retenue (9) est formé d'un seul tenant avec la partie de boîtier (3a) et de préférence dans le même matériau que celle-ci.

6. Dispositif de verrouillage (1) selon l'une des revendications 1 à 4, **caractérisé en ce que** le bras de retenue (9) est formé par un élément en tôle ou un élément en fil métallique qui est relié à la partie de boîtier (3a) au point de liaison (11).

7. Dispositif de verrouillage (1) selon l'une des revendications précédentes, **caractérisé en ce que** l'élément d'assujettissement (8) est précontraint au moyen d'un élément de ressort (13) dans la direction d'engagement dans la géométrie d'engagement positif (7), sachant que l'élément d'assujettissement (8) présente une saillie (8a) qui est amenée en application de retenue contre une extrémité libre (9a) du bras de retenue (9).

8. Dispositif de verrouillage (1) selon l'une des revendications précédentes, **caractérisé en ce que** l'élément d'assujettissement (8) est mobile, suivant un axe de déplacement (14) s'étendant perpendiculairement à l'axe de translation (6), entre la position d'engagement pour la liaison fonctionnelle avec la géométrie d'engagement positif (7) et la position de retrait pour le retrait de la liaison fonctionnelle avec la géométrie d'engagement positif (7), sachant que le bras de retenue (9) s'étend au moins pour partie parallèlement à l'axe de translation (6) du boulon de verrouillage (5) et perpendiculairement à l'axe de déplacement (14).

9. Dispositif de verrouillage (1) selon la revendication 7 ou 8, **caractérisé en ce que** l'extrémité libre (9a) du bras de retenue (9) est fonctionnellement reliée à l'élément d'assujettissement (8) de telle sorte que l'élément d'assujettissement (8) se libère de la retenue par le bras de retenue (9), et peut être transféré par l'élément de ressort (13) dans la position d'engagement pour l'engagement dans la géométrie d'engagement positif (7), lorsque le bras de retenue (9) est déplacé en direction de l'élément d'assujettissement (8) ou en éloignement de l'élément d'assujettissement (8).

10. Dispositif de verrouillage (1) selon la revendication 9, **caractérisé en ce que** l'extrémité libre (9a) du bras de retenue (9) présente une première ouverture (9.1) et une deuxième ouverture (9.2) qui sont pratiquées dans l'extrémité libre (9a) de telle sorte que la saillie (8a) réalisée de préférence en forme de disque peut passer à travers la première ouverture (9.1) lors du déplacement du bras de retenue (9) en direction de l'élément d'assujettissement (8) et à travers la deuxième ouverture (9.2) lors du déplacement du bras de retenue (9) en éloignement de l'élément d'assujettissement (8), afin que l'élément d'assujettissement (8) soit respectivement transféré par l'élément de ressort (13) dans la position d'engagement pour l'engagement dans la géométrie d'engagement positif (7).

11. Dispositif de verrouillage (1) selon l'une des revendications précédentes, **caractérisé en ce qu'**il est prévu un élément intermédiaire (15) qui présente une extrémité libre (15a) pour la liaison fonctionnelle de retenue avec l'élément d'assujettissement (8) et qui est reçu dans le dispositif de verrouillage (1) à déplacement dans la direction de développement du bras de retenue (9), sachant que l'élément intermédiaire (15) est, au moyen d'un élément de ressort (16), précontraint dans la direction de déplacement dans laquelle la liaison fonctionnelle de retenue entre l'élément d'assujettissement (8) et l'élément intermédiaire (15) se libère.

12. Dispositif de verrouillage (1) selon la revendication 11, **caractérisé en ce que** l'élément intermédiaire (15) présente une surface de contact (15b) qui est atteinte par le bras de retenue (9), lequel maintient ainsi l'élément intermédiaire (15) en liaison fonctionnelle de retenue avec l'élément d'assujettissement (8), sachant que la surface de contact (15b) est de préférence réalisée convexe en direction du bras de retenue (9).

13. Dispositif de verrouillage (1) selon l'une des revendications précédentes, **caractérisé en ce que** le bras de retenue (9) est réalisé en forme de L et présente une partie s'étendant parallèlement à l'axe de translation (6) et une partie s'étendant transversalement à l'axe de translation (6), de sorte que le bras de retenue (9) est guidé tout autour d'un organe de commande (17) présent pour le déplacement du boulon de verrouillage (5).
